# EUROPEAN PATENT SPECIFICATION

(11) **EP 2 596 626 B1**
(45) Date of publication and mention of the grant of the patent: **29.08.2018**
(21) Application number: 10854856.1
(22) Date of filing: 20.07.2010
(51) Int. Cl.: H04N 5/921, G11B 27/00, G06F 17/30, G11B 27/10, H04N 5/783, H04N 5/85

(54) **METHOD FOR CONTENT PRESENTATION DURING TRICK MODE OPERATIONS**
VERFAHREN ZUR INHALTSPRÄSENTATION WÄHREND EINES TRICKMODUSBETRIEBS
PROCÉDÉ DE PRÉSENTATION DE CONTENU AU COURS DE FONCTIONNEMENTS EN MODE TRUQUÉ

(43) Date of publication of application: 29.05.2013
(73) Proprietor: Thomson Licensing DTV, 92130 Issy-les-Moulineaux (FR)
(72) Inventor: CHEN, Jian Feng, Beijing 100085 (CN); MA, Xiao Jun, Beijing 100085 (CN)
(74) Representative: Desvignes, Agnès
(86) International application number: PCT/CN2010/001088
(87) International publication number: WO 2012/009825

(56) References cited:
- WO-A1-2004/075183
- WO-A1-2007/099496
- WO-A2-2004/091186
- CN-A- 1 771 549
- CN-A- 101 395 607
- US-A1- 2002 059 074
- US-A1- 2007 180 488
- US-A1- 2008 193 102

## Description

### TECHNICAL FIELD

The present invention relates to user interface, and more particularly, relating to a method for content presentation during trick mode operations.

### BACKGROUND

Multimedia players implemented by either hardware or software are very popular, such as, DVD player, VCD player, MP4 player, MP3 player and etc. of hardware type players, and Windows Media Player, Quick Time player and etc. of software type players.

The multimedia player provides normal playback operations, such as operations of play (or called playback), trick mode operations, such as fast forward, reverse, fast reverse, etc and other control operations, such as stop, pause and etc. The operations capable of being provided by multimedia players vary from one player to another, and under some circumstances, additional operation(s) can be added based on developer's specific purpose, e.g. a record operation.

The fast forward operation among trick mode operations is speedup of normal playback, and it is used by a user to search for a specific scene either he is interested in or has missed before. The speed of fast forward operation typically includes 1.5X (1.5 times as speed as normal playback), 2X, 4X etc. and the set of the fast forward speed may vary from one multimedia player to another. Sometimes, the speed of normal playback operation can be denoted as 1X. The reverse operation is reverse of normal playback, and the fast reverse is a fast reverse of normal playback with the speed larger than 1X.

During any trick mode operation, the player will set the volume mute with the video frame played back in a way that is not possible for user to understand what happens during the trick mode operation.

Therefore, a method for content presentation during trick mode operations is desired.

US2008/0193102 is about a method enabling to play alternative advertisement content when fast-forward operation during advertisement break is detected. US2002/0059074 is about enabling to play a modified audio and video set of data at a target data rate, with little or no distorsion of audio data.

### SUMMARY

According to an aspect of present invention, it is provided a method as claimed in the appended independent claim 1, for additional content presentation during trick mode operations, in order to facilitate a user to understand what the current video is about during a trick mode operation.

Advantageous embodiments are defined in the appended dependent claims.

### BRIEF DESCRIPTION OF THE DRAWINGS

The accompanying drawings, which are included to provide a further understanding of the, illustrate embodiments of the invention together with the description which serves to explain the principle of the invention. Therefore, the invention is not limited to the embodiments. In the drawings:
Fig. 1 is an exemplary diagram illustrating an example on preparation of additional audio files for trick mode operations according to an embodiment of present invention;
Fig. 2 is an exemplary diagram illustrating another example on preparation of additional audio files for trick mode operations according to the embodiment of present invention;
Fig. 3 is a flow chart illustrating a method for playing back additional audio files during trick mode operations according to the embodiment of present invention;
Fig. 4 is a diagram illustrating the conceptually partition of the main video file with a time length of 50 minutes according to the embodiment of present invention;
Fig. 5 is a message sequence chart illustrating the playback of auxiliary content for a trick mode operation between a player and a server according to an embodiment of present invention;
Fig. 6 shows an example of a modified program map table according to the embodiment of present invention;
Fig. 7 shows an example of definition of the Trick_mode_descriptor according to the embodiment of present invention;
Fig. 8 shows an example of definition of the Auxiliary_content_type according to the embodiment of present invention;
Fig. 9 shows an example of relationship between main content, auxiliary audio content and auxiliary video content according to the embodiment of present invention;
Fig. 10 shows another example of definition of the Trick_mode_descriptor according to the embodiment of present invention.

### DETAILED DESCRIPTION

An embodiment of the present invention will now be described in detail in conjunction with the drawings. In the following description, some detailed descriptions of known functions and configurations may be omitted for clarity and conciseness.

The present invention proposes to provide a user with a good understanding about what is the video segment of main content (e.g. a movie), which is played back during trick mode operations, about by using additional content. The additional content may be made up of a plurality of content items, which are independent from each other in terms of storage. Each content item corresponds to a video segment and introduces the summary of the corresponding video segment. The correspondence between content items and video segments can be implemented in many ways. One example is that the correspondence is recorded in a table where a starting time and an ending time of a video segment correspond to a content item, or a starting time and the time length of a video segment correspond to a content item. In addition, the additional content can be in one presentation form or combined two or more presentation forms selected from a group including audio, video, text, flash, picture etc.

Embodiments below use additional audio content as the additional content (or called auxiliary content) to explain a method for audio content presentation during trick mode operations. Before the description of the method, description on preparation of additional audio content for all or a subset of trick mode operations is given.

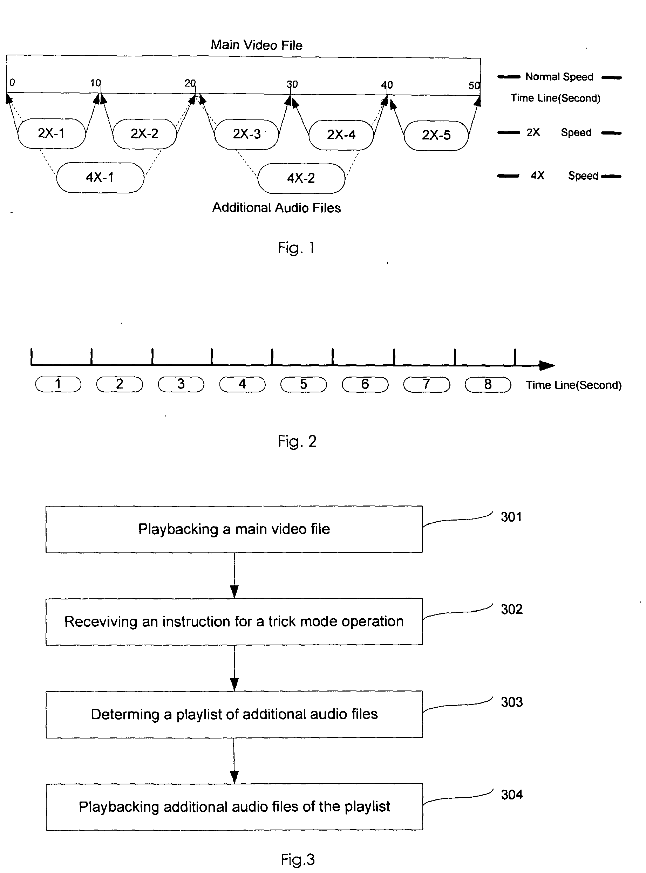

Fig. 1 is an exemplary diagram illustrating an example on preparation of additional audio files for trick mode operations according to an embodiment of present invention. It shall note that the Fig. 1 only shows a portion of a main video file and the corresponding additional audio files, and this example only includes trick mode operations of fast forward 2X speed and fast forward 4X speed. But a person skilled in the art shall appreciate that the principle of present invention shall not limited to 2X speed and 4X speed, and not limited to fast forward trick mode operation. As can be seen from the Fig. 1, this example shows a portion of the main video file of 50 seconds in the time line. In the 2X speed trick mode, the portion is averagely partitioned into 5 video segments of each lasting 10 seconds (the partition here is a conceptual partition, and it does not mean that the video maker needs to process the main video file, e.g. using a video editing software to partition the main video file into a plurality of sub video files); each video segment corresponds to an additional audio file, i.e. addition audio files labeled 2X-1, 2X-2, 2X-3, 2X-4 and 2X-5. The additional audio files are prepared in advance and are used to introduce the summary of their corresponding video segments, e.g. the 2X-3 additional audio file is used to introduce the summary of the video segment starting from the 20^{th} second and ending at 30^{th} second. In the 4X speed trick mode, only 2 additional audio files are shown in this example, i.e. 4X-1 and 4X-2 additional audio files for video segment ranging from 0 second to the 20^{th} second and video segment ranging from the 20^{th} second to the 40^{th} second, respectively. According to a variant, the main video file is not partitioned averagely as the Fig. 1 shows. Instead, it is partitioned in accordance with its scenes. In film industry, a scene is defined as a complete unit of film narration, and in a scene, a series of shots (or a single shot) takes place in a single location and deals with a single action. And consequently, it becomes easier for the video maker (or film maker) to prepare additional audio files for describing scenes of the main video file.

Fig. 2 is an exemplary diagram illustrating another example on preparation of additional audio files for trick mode operations according to the embodiment of present invention. In this example, the video maker does not need to prepare a set of additional content for each trick mode operation, and only one set of additional content is prepared. The main video file is partitioned into video segments, and it can be either average partition or non-average partition. The video maker prepares an additional audio file for each video segment. In addition, the video maker also needs to prepare a formula or a database to indicate which additional audio files will be played back for a trick mode operation. That is, with regard to a selected trick mode operation, a playlist of additional audio files can be generated based on the formula or the database. For example, for the 2X fast forward, the playback sequence of the additional audio files is 1-2-3-4...; for the 3X fast forward, the playback sequence is 1-3-5-7...; for the 4X fast forward, the playback sequence is 1-4-7.... It shall note it is easy for a person skilled in the art to prepare a formula or a database to indicate above playback sequences for different trick mode operations, and it shall also note a video maker may use playback sequences different from ones given in above example based on his needs. An advantage the above example brings is the video maker does not need to prepare additional audio files for each trick mode operation as the example in the Fig. 1 does. He only needs to prepare addition audio files for all video segments of the main video file and a formula or a database indicating the playback sequences for all trick mode operations (or a subset of trick mode operations on which the film maker want to apply the principle of the present invention).

As introduced above, the example in the Fig. 1 prepares a set of additional audio files for each trick mode operation while the example in the Fig. 2 only prepares one set of additional audio files for all trick mode operations. It shall note a person skilled in the art may adopt a mixture of the two examples, i.e. the example in the Fig. 1 is adopted for some portions of the main video file and the rest adopts the example in the Fig. 2. In addition, a person skilled in the art shall appreciate that it is possible that some portions of the main video do not adopt example of either Fig. 1 or Fig. 2, i.e. no additional content is prepared for these portions; and in the trick mode operations, the player works in the same way as current player does.

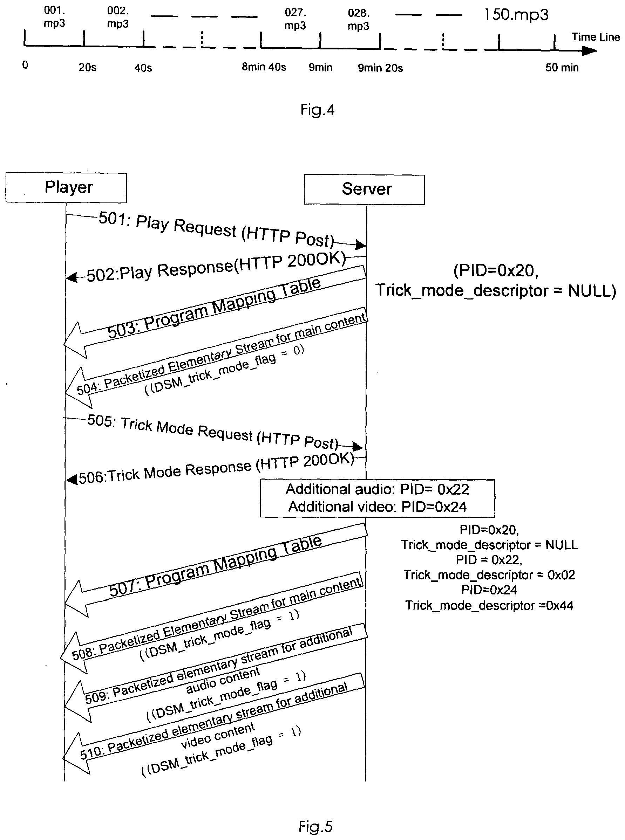

Fig. 3 is a flow chart illustrating a method for playing back additional audio files during trick mode operations according to the embodiment of present invention. In this example, the relationship between the main video file and the additional audio files uses the same way as example of Fig. 2 shows. The additional audio files labeled 0001.mp3, 0002.mp3, 0003.mp3 are stored in the same storage medium as the main video file, for example, in a same folder of a hard disc. However, a person skilled in the art shall appreciate that the additional audio files and the main video file can be burned into a DVD disc for a DVD player. Fig. 4 is a diagram illustrating the conceptually partition of the main video file with a time length of 50 minutes (e.g. a movie file). As can be seen from the Fig. 4, the main video file is averagely partitioned to video segments with each video segment lasting 20 seconds. The correspondence relationship in this example is defined by a formula, i.e. using the integer fraction of the time value dividing 20 seconds to add 1.

In the step 301, a multimedia player plays back the main video file;

In the step 302, the multimedia player receives an instruction for a trick mode operation. For example, at the time of 8 min 45 s, the user uses a remote controller to send a 2X fast forward instruction message, e.g. carried in an infrared signal, to the multimedia player. A person skilled in art shall know that the instruction can be sent by other means via either wired medium or wireless medium.

In the step 303, the multimedia player determines a playlist of additional audio files for the trick mode operation. In this example, the video maker prepares a database for generating playlist of additional audio files. The inputs include current playback time stamp of the main video file when a trick mode operation is triggered, trick mode operation type and its speed. Below shows a table for fast forward operation with 2X speed. With reference to this table, a person skilled in art shall know how to prepare tables in the database for, e.g. 3X fast forward operation, 4X fast forward operation etc. As above example shows, a 2X fast forward operation is triggered at 8 min 45s. So the generated playlist includes 027.mp3, 028.mp3, 029.mp3, 030.mp3... and 150.mp3. In addition, the principle of this invention can also apply for reverse operation. Considering a 2X fast reverse operation corresponds to a 2X speed reverse table with the same data values as the table 1. When a 2X fast reverse operation is triggered at 8 min 45s, the generated playlist may includes the play sequence of 027.mp3, 026.mp3, 025.mp3 ... and 001.mp3. A person skilled in the art shall know that other organizations of tables in the database are also possible, and the main purpose of the database is to generate a playlist of additional audio files based on time information of the main video file and the information about the triggered trick mode operation.

**Table 1: look up table for 2X speed fast forward**

| 2X Speed fast forward | Starting time | Ending time |
|---|---|---|
| 001.mp3 | 0 | 20s |
| 002.mp3 | 20s | 40s |
| ... | ... | ... |
| ... | ... | ... |
| 027.mp3 | 8min 40s | 9min |
| 028.mp3 | 9min | 9min 20s |
| ... | ... | ... |
| ... | ... | ... |
| 150.mp3 | 49min 40s | 50min |

In the step 304, the multimedia player plays back the determined playlist of additional audio files. One embodiment is to mute the audio track playback of the main video file and start to play back the additional audio files according to the playlist. For other type of additional content such as video, text, picture, a picture in picture pattern can be implemented in the player. The main content will be displayed as background window, while the additional content will be displayed in the foreground window.

When an instruction of returning to normal playback mode is sent, the multimedia player stops playing back the additional audio files and starts to play back the main video file.

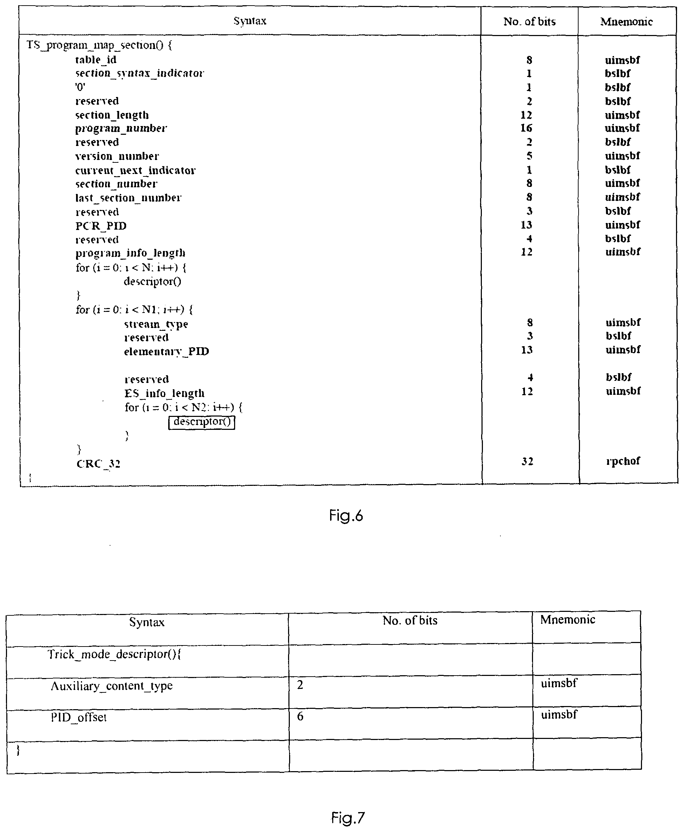

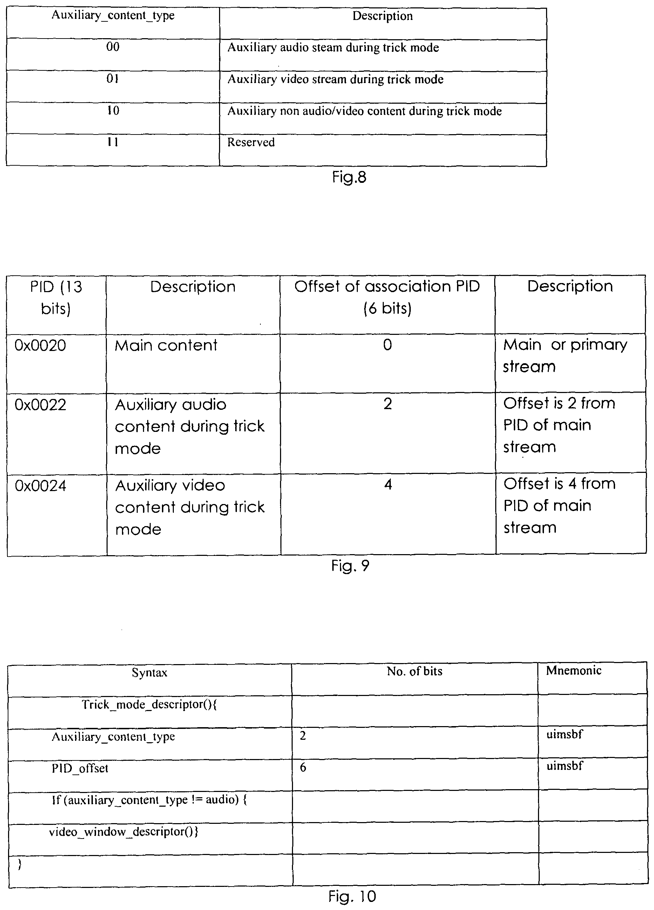

Fig. 5 is a message sequence chart illustrating the playback of auxiliary (additional) content for a trick mode operation between a player and a server according to another embodiment of present invention. The example is set into a system adopting MPEG TS standard (ISO-IEC 13818-1 Information technology - Generic coding of moving pictures and associated audio information: Systems) with modification made to the standard as indicated below. Current MPEG TS format only defines the trick mode operation in the PES packet when the DSM_trick_mode_flag is set to '1'. A modification of the MPEG-TS standard is made so as to make it support the principle of the present invention. Fig. 6 is a modified program map table, which is the complete collection of all programs definitions for a transport stream (TS). The program map table shall be transmitted in packets, the program identification (PID) values of which are selected by the encoder. Since the auxiliary content is only triggered to play back during trick mode operations, it does not need to transmit the auxiliary content during normal playback mode, and when the trick mode is triggered, it adds the description of data stream carrying the auxiliary content in the PMT. The detailed description can be found below. As can be seen from the Fig. 6, a descriptor named Trick_mode_descriptor is added to establish the association between the main content and the auxiliary content. Fig. 7 shows the definition of the Trick_mode_descriptor. It contains two fields of Auxiliary_content_type and PID_offset that are used to determine the type of the auxiliary content and PID of datastream carrying the auxiliary content, respectively. Fig. 8 shows the definition of the Auxiliary_content_type, and it shall note that a person skilled in the art can make a definition based on his needs. The PID_offset defines a value offset between a PID value of data stream carrying the main content (which is carried in elementary_PID of Fig. 6) and a PID value of data stream carrying the auxiliary content. For example, assuming the PID of the main content carried in the elementary_PID is 0x0020, and both a auxiliary video content and an auxiliary audio content are associated with the main content during a trick mode operation. When a trick mode operation is triggered, as shown by Fig. 9, the PIDs of auxiliary audio content and auxiliary video content can be obtained by using the PID of main content data stream and offset values. As can be seen from the Fig. 5, a user wants to play back on-line video on demand (VOD).
In the step 501, the player sends a HTTP play post message requesting a video file to the server, with the action description in the message body, one example is "event=play";
In the step 502, the server gives HTTP play response message with the Status-Code in the header setting as 200, the meaning is "The action was successfully received, understood, and accepted", the message body of the 200OK response can be null or include the corresponding description of the media content;
In the step 503, the server transmits program map table, and the program map table contains PID of a data stream carrying the requested video file (e.g. PID=0x20) and stream type of video, but the trick_mode_descriptor will be null;
In the step 504, the data of the requested video file is encapsulated in the PES (packetized elementary stream), and then sent to the player through TCP or UDP connection, and the DSM_trick_mode_flag is 0 in the PES header.
In the step 505, when a trick mode operation is triggered in the player, the player sends a new HTTP post message to the server with the action description in the message body, for example, the action description is "event=fast forward";
In the step 506, the server gives HTTP response with the Status-Code in the header setting as 200, the meaning is "The action was successfully received, understood, and accepted". And at the server's side, if the auxiliary content is available, the additional content will be assigned PID (e.g. 0x22 for the additional audio stream, 0x24 for the additional video stream). From above description, it can be seen that both additional audio files and additional video files are used in this embodiment. However, a person skilled in art may choose to use only one of them.
In the step 507, the server sends a new program map table to the player. In the new program map table, the modification is the insertion of the 2 new additional contents with the PID definition and the trick_mode_descriptor description.
In the step 508, the PES transmission for the media requested video file is continued to be transmitted in the data stream with PID=0x20 and with the DSM_trick_mode_flag of 1 in the PES header. The player follows the definition in the ISO 13818 to process this data stream of the requested video file;
In the steps 509 and 510, the data of additional audio files and additional video files is transmitted to the player, and the DSM_trick_mode_flag is 1 in the PES header. Regarding the server's preparing the playlists for both additional audio files and additional video files, the server may adopt a same method as used in the method of Fig. 3. After receiving the data streams of additional audio files and additional video files, the player will determine the displaying pattern for the additional audio files and additional video files. One example is to play the additional video files in the foreground window, play the requested video file in the background window, mute the audio track of the requested video file and play the additional audio files.

According to a variant of present embodiment, Fig. 10 shows another example of definition of Trick_mode_descriptor. Compared with the definition in the Fig. 7, video_window_descriptor is added. And the field of video_window_descriptor exists only when the additional content is not audio files. The video_window_descriptor is used to describe the window characteristics of the associated video elementary stream. For example, it can be used to define the horizontal_offset, vertical_offset, window_priority fields of the corresponding window.

The above example is described in a system adopting the MPEG TS standard. It shall note that the principle of the present invention also apply for other standards with some modification to those standards. For example, it can apply for MP4 standard (ISO/IEC 14496-12 Information technology - Coding of audio-visual objects - Part 12: ISO base media file format) with some adaptive changes made to the standard.

The relationship of the primary stream and the auxiliary content can be defined in the Track Reference Box with the definition of following:
*Box Type:* '*tref*'
*Container: Track Box ('trak)*
*Mandatory: No*
*Quantity: Zero or one*

There is already a field named reference_type in this Track Reference Box, we just extend its definition for the trick mode supporting.

The syntax is as follow:

```
    aligned(8) class TrackReferenceBox extends Box('tref) {}
    aligned(8) class TrackReferenceTypeBox (unsigned int(32) reference_type) extends
    Box(reference_type) {
    unsigned int(32) track_IDs[];
   }
```

The semantics is as follow:
In current standard definition, the reference_type shall be set to one of the following values:
1. "hint": the referenced track(s) contain the original media for this hint track.
2. "cdsc": this track describes the referenced track. and
3. "hind": this track depends on the referenced hint track.

The extension of the auxiliary content type is 'cdsc_trick', this track describes the referenced track and it should only be used if the trick mode is operated. This extension is working for the simultaneously displaying of the primary content and the auxiliary content.

For the deployment scenario that the auxiliary content will replace the primary content during trick mode, for example, the episode introduction audio track will replace the original audio track which will be played in the faster speed under trick mode. The Track Selection Box can be used for such operation. Firstly, the primary track and the auxiliary content will be assigned to the same alternate group, the definition of alternate_group is in Track Header Box (template int(16) alternate_group), If this field is 0 there is no information on possible relations to other tracks. If this field is not 0, it should be the same for tracks that contain alternate data for one another and different for tracks belonging to different such groups. Only one track within an alternate group should be played or streamed at any one time, and must be distinguishable from other tracks in the group via attributes list (unsigned int(32) attribute_list[]). The attributes in this list should be used as descriptions of tracks or differentiation criteria for tracks in the same alternate or switch group such as bit rate, codec, language, packet size etc. We make the extension for the attribute field to identify the trick mode operation as follows:

| Name | Attribute | Description |
|---|---|---|
| Trick mode auxiliary | 'tria' | The track is for trick mode auxiliary content |
| Trick mode | 'tric' | The trick mode operation, fast forward, reverse |
| Trick mode speed | 'tris' | The trick mode operation speed |

With the extension of MP4 standard as described above, a person skilled in art shall contemplate the application of the principle of the present invention on the MP4 standard with reference to the application of the principle of the present invention on MPEG TS standard.

According to a variant of present embodiment, when the auxiliary content is not audio files, the auxiliary content can be displayed in the pattern of PIP (picture in picture). The display region can be defined in the "width" and "height" field in the Track Header Box. The detailed format of the auxiliary content can be defined in the sample table Sample Description Box. Auxiliary audio tracks may be created by an authoring tool, or may be added to an existing presentation by a hinting tool. Such a tool serves as a 'bridge' between the media and the protocol. Therefore, when the server receives the event report of the trick mode including the trick mode type and speed, the correct position of the auxiliary track will be determined and the content will be delivered in a new media box.

According to a variant of present embodiment, it does not always need to determine the playlist of additional audio files before playing back them. It can be done in a real time manner, i.e. only determine which additional audio file is going to be used for current video segment, and the next additional audio file will be determined when it goes to the next video segment. This process is repeated until the player returns to normal playback operation.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed within the scope of the appended claims.

## Claims

1. A method for presenting additional content during trick mode operations performed during play back of a video file, wherein trick mode operations include fast forward operations at different trick mode speeds,
**characterized in that**
the video file is associated with a plurality of additional content items, said additional content items having been prepared in advance to the play back of the video file and being independent from each other in terms of storage, wherein said content items are only triggered to play back during trick mode operations, types of the content items comprise video, audio, text and picture, and
each content item corresponds to a video segment of the video file, and introduces a summary of the corresponding video segment, wherein a video segment is a portion of the video file identified by a starting time and an ending time or a starting time and a time length in the time line of the video file, the method further comprising:
playing (301) the video file in a normal play back operation at a normal speed;
and when an instruction for a selected trick mode operation is received (302), start playing the video file at the current segment according to the selected trick mode operation and simultaneously playing (303, 304) a sequence of additional content items until an instruction of returning to normal play back mode is received, said sequence of additional content items starting with a content item corresponding to said identified current video segment and the subsequent content items being determined according to the selected trick mode operation and the selected trick mode speed.

2. The method of the claim 1, **characterized by**
playing two content items corresponding to said current video segment of the video file and selected trick mode operation while performing the selected trick mode operation on said current video segment, wherein, one content item is in the type of audio and the other content item is in the type of video, text, picture or flash.

3. The method of the claim 1, **characterized by** further comprising,
receiving an instruction for the selected trick mode operation during the playback of the video segment of the video file at a time point in the timeline of the video file;
determining a playlist of content items based on the time point and the chosen trick mode operation; and
playing content items in the determined playlist.

4. The method of the claim 1, **characterized by** further comprising,
receiving an instruction for the selected trick mode operation during the playback of the video segment of the video file at a time point in the timeline of the video file;
determining at least one content item based on the time point and the selected trick mode operation;
playing the determined at least one video item during the trick mode operation of the video segment of the video file;
repeating determining and playing a next content item based on the time information of the video file and the selected trick mode operation as the video file goes to a next video segment until receiving an instruction for returning to normal play back mode of the video file.

5. The method of the claim 1, **characterized in that** during the selected trick mode operation, the video file is present in a background window, and visual content item within the at least one content item is present in a foreground window.

## Patentansprüche

1. Verfahren zum Darstellen von zusätzlichem Inhalt während Trickbetriebsartoperationen, die während der Wiedergabe einer Videodatei ausgeführt werden, wobei die Trickbetriebsartoperationen Operationen des schnellen Vorlaufs bei unterschiedlichen Trickbetriebsartgeschwindigkeiten enthalten,
**dadurch gekennzeichnet, dass**
der Videodatei mehrere zusätzliche Inhaltseinheiten zugeordnet sind, wobei die zusätzlichen Inhaltseinheiten vor der Wiedergabe der Videodatei im Voraus vorbereitet worden sind und hinsichtlich der Speicherung voneinander unabhängig sind,
wobei
die Inhaltseinheiten nur zur Wiedergabe während Trickbetriebsartoperationen ausgelöst werden,
die Typen der Inhaltseinheiten Video, Audio, Text und Bild umfassen und wobei jede Inhaltseinheit einem Videosegment der Videodatei entspricht und eine Zusammenfassung des entsprechenden Videosegments einfügt, wobei ein Videosegment ein durch eine Anfangszeit und eine Endzeit oder durch eine Anfangszeit und eine Zeitdauer auf dem Zeitstrahl der Videodatei identifizierter Abschnitt der Videodatei ist,
wobei das Verfahren ferner umfasst:
Abspielen (301) der Videodatei in einer normalen Wiedergabeoperation mit einer normalen Geschwindigkeit; und
Beginnen des Abspielens der Videodatei bei dem gegenwärtigen Segment in Übereinstimmung mit der gewählten Trickbetriebsartoperation und gleichzeitiges Abspielen (303, 304) einer Folge zusätzlicher Inhaltseinheiten, bis eine Anweisung zum Zurückkehren in die normale Wiedergabebetriebsart empfangen wird, wenn eine Anweisung für eine gewählte Trickbetriebsartoperation empfangen wird (302), wobei die Folge zusätzlicher Inhaltseinheiten mit einer Inhaltseinheit, die dem identifizierten gegenwärtigen Videosegment entspricht, beginnt und wobei die nachfolgenden Inhaltseinheiten in Übereinstimmung mit der gewählten Trickbetriebsartoperation und mit der gewählten Trickbetriebsartgeschwindigkeit bestimmt werden.

2. Verfahren nach Anspruch 1, **gekennzeichnet durch** Abspielen zweier Inhaltseinheiten, die dem gegenwärtigen Videosegment der Videodatei und der gewählten Trickbetriebsartoperation entsprechen, während die gewählte Trickbetriebsartoperation an dem gegenwärtigen Videosegment ausgeführt wird, wobei eine Inhaltseinheit in dem Typ Audio ist und die andere Inhaltseinheit in dem Typ Video, Text, Bild oder Flash ist.

3. Verfahren nach Anspruch 1, **dadurch gekennzeichnet, dass** es ferner umfasst:
Empfangen einer Anweisung für die gewählte Trickbetriebsartoperation während der Wiedergabe des Videosegments der Videodatei zu einem Zeitpunkt auf dem Zeitstrahl der Videodatei;
Bestimmen einer Wiedergabeliste von Inhaltseinheiten auf der Grundlage des Zeitpunkts und der gewählten Trickbetriebsartoperation; und
Abspielen von Inhaltseinheiten in der bestimmten Wiedergabeliste.

4. Verfahren nach Anspruch 1, **dadurch gekennzeichnet, dass** es ferner umfasst:
Empfangen einer Anweisung für die gewählte Trickbetriebsartoperation während der Wiedergabe des Videosegments der Videodatei zu einem Zeitpunkt auf dem Zeitstrahl der Videodatei;
Bestimmen mindestens einer Inhaltseinheit auf der Grundlage des Zeitpunkts und der gewählten Trickbetriebsartoperation;
Abspielen der bestimmten mindestens einen Videoeinheit während der Trickbetriebsartoperation des Videosegments der Videodatei;
Wiederholen des Bestimmens und des Abspielens einer nächsten Inhaltseinheit auf der Grundlage der Zeitinformationen der Videodatei und der gewählten Trickbetriebsartoperation, während die Videodatei zu einem nächsten Videosegment geht, bis eine Anweisung zum Zurückkehren zu der normalen Wiedergabebetriebsart der Videodatei empfangen wird.

5. Verfahren nach Anspruch 1, **dadurch gekennzeichnet, dass** die Videodatei während der gewählten Trickbetriebsartoperation in einem Hintergrundfenster vorhanden ist und dass eine visuelle Inhaltseinheit innerhalb der mindestens einen Inhaltseinheit in einem Vordergrundfenster vorhanden ist.

## Revendications

1. Procédé de présentation de contenu supplémentaire au cours d'opérations en mode truqué exécutées au cours de la lecture d'un fichier vidéo, dans lequel les opérations en mode truqué incluent des opérations d'avance rapide à différentes vitesses de mode truqué,
**caractérisé en ce que**
le fichier vidéo est associé à une pluralité d'éléments de contenu supplémentaire, lesdits éléments de contenu supplémentaire ayant été préparés en amont de la lecture du fichier vidéo et étant indépendants les uns des autres en termes de stockage,
dans lequel
lesdits éléments de contenu sont déclenchés uniquement pour lire au cours d'opérations en mode truqué des types d'éléments de contenu comprenant de la vidéo, de l'audio, du texte et de l'image, et chaque élément de contenu correspond à un segment vidéo du fichier vidéo et introduit un résumé du segment vidéo correspondant, dans lequel un segment vidéo est une partie du fichier vidéo identifiée par une heure de début et une heure de fin ou une heure de début et une durée dans la ligne de temps du fichier vidéo, le procédé comprenant en outre :
la lecture (301) du fichier vidéo lors d'une opération de lecture normale à une vitesse normale ;
et
lorsqu'une instruction pour une opération en mode truqué sélectionnée est reçue (302), le démarrage de la lecture du fichier vidéo au segment actuel en fonction de l'opération en mode truqué sélectionnée et la lecture simultanée (303, 304) d'une séquence d'éléments de contenu supplémentaire jusqu'à la réception d'une instruction de retour au mode de lecture normal, ladite séquence d'éléments de contenu supplémentaire commençant par un élément de contenu correspondant audit segment vidéo actuel identifié et les éléments de contenu suivants étant déterminés en fonction de l'opération en mode truqué sélectionnée et de la vitesse de mode truqué sélectionnée.

2. Procédé selon la revendication 1 **caractérisé par**
la lecture de deux éléments de contenu correspondant audit segment vidéo actuel du fichier vidéo et à l'opération en mode truqué sélectionnée lors de l'exécution de l'opération en mode truqué sélectionnée sur ledit segment vidéo actuel, dans lequel un élément de contenu est de type audio et l'autre élément de contenu est de type vidéo, texte, image ou flash.

3. Procédé selon la revendication 1, **caractérisé en ce qu'**il comprend en outre
la réception d'une instruction pour l'opération en mode truqué sélectionnée au cours de la lecture du segment vidéo du fichier vidéo à un point temporel de la ligne de temps du fichier vidéo ;
la détermination d'une liste de lecture d'éléments de contenu en fonction du point temporel et de l'opération en mode truqué sélectionnée ; et
la lecture des éléments de contenu de la liste de lecture déterminée.

4. Procédé selon la revendication 1, **caractérisé en ce qu'**il comprend en outre
la réception d'une instruction pour l'opération en mode truqué sélectionnée au cours de la lecture du segment vidéo du fichier vidéo à un point temporel de la ligne de temps du fichier vidéo ;
la détermination d'au moins un élément de contenu en fonction du point temporel et de l'opération en mode truqué sélectionnée ;
la lecture du au moins un élément vidéo déterminé au cours de l'opération en mode truqué du segment vidéo du fichier vidéo ;
la répétition de la détermination et de la lecture d'un élément de contenu suivant en fonction des informations temporelles du fichier vidéo et de l'opération en mode truqué sélectionnée lorsque le fichier vidéo passe à un segment vidéo suivant jusqu'à la réception d'une instruction de retour au mode de lecture normal du fichier vidéo.

5. Procédé selon la revendication 1, **caractérisé en ce que**, au cours de
l'opération en mode truqué sélectionnée, le fichier vidéo est présent dans une fenêtre en arrière-plan et un élément de contenu visuel dans le au moins un élément de contenu est présent dans une fenêtre en avant-plan.
